# EUROPÄISCHE PATENTSCHRIFT

(11) **EP 1 703 258 B1**
(45) Veröffentlichungstag und Bekanntmachung des Hinweises auf die Patenterteilung: **25.04.2012**
(21) Anmeldenummer: 06001777.9
(22) Anmeldetag: 28.01.2006
(51) Int. Cl.: G01C 22/00, B62J 99/00

(54) **Fahrradcomputer**
Bicycle computer
Ordinateur de bicyclette

(30) Priorität: 19.03.2005 DE 102005012791
(43) Veröffentlichungstag der Anmeldung: 20.09.2006
(73) Patentinhaber: Trelock GmbH, 48149 Münster (DE)
(72) Erfinder: Kortenbrede, Ludger, 48291 Telgte (DE); Wissmann, Andreas, 48346 Ostbevern (DE); Steinkamp, Winfried, 48249 Dülmen (DE); Wewer, Franz-Josef, 48291 Telgte (DE)
(74) Vertreter: Hentrich, Swen

(56) Entgegenhaltungen:
- US-A1- 2004 254 650
- US-B1- 6 430 040

## Beschreibung

Die Erfindung betrifft einen Fahrradcomputer mit einem Computergehäuse, in dem eine Anzeigeeinheit, ein Rechenwerk mit einer Speichereinheit und ein Empfänger für Sensordaten angeordnet sind, und mit einem Daten generierenden, mit dem Empfänger verbundenen Sensor.

Derartige Fahrradcomputer sind in der Praxis weit verbreitet, wobei in den meisten Anwendungsfällen der Sensor durch einen Geschwindigkeitsmesser gebildet ist, bei dem in eine Spule Signale von einem den Speichen zugeordneten Magneten bei einem Umlauf des Rades induziert werden. Derartige Sensoren sind einfach und kostengünstig ausgeführt und daher nicht weiter gegen Diebstahl gesichert; die Fahrradcomputer sind innerhalb einer Produktlinie einheitlich gestaltet, so daß der Nutzer zur Besonderen Berücksichtigung seiner Bedürfnisse nicht den Fahrradcomputer anpassen kann, sondern auf alternative Produkte ausweichen muss.

Aus der US 2004/0254650 A1 ist ein Fahrradcomputer der eingangs genannten Art bekannt, dem Sensoren und Aktuatoren zugeordnet sind, die drahtlos oder verdrahtet mit dem Fahrradcomputer verbunden sein können. Der Obergriff vom Anspruch 1 stützt sich auf US 2004/0254650 A1. Bei drahtloser Abbildung ist eine Identifizierung der entfernten Bauteile erforderlich, wozu Vorspannbytes Verwendung finden.

Der Erfindung liegt daher die Aufgabe zugrunde, einen Fahrradcomputer der eingangs genannten Art so auszubilden, dass dieser in einfacher Weise gezielt auf die Bedürfnisse des Nutzers abgestimmt werden kann und besser gegen Diebstahl geschützt ist.

Diese Aufgabe wird nach der Erfindung bei einem Fahrradcomputer der eingangs genannten Art dadurch gelöst, dass in der Speichereinheit eine Codierung und ein nummerischer Schlüssel hinterlegt ist, dass dem Sensor der nummerische Schlüssel und eine Codierung zugeordnet ist, durch deren Übermittlung an das Rechenwerk und dessen Vergleich mit der in der Speichereinheit hinterlegten Codierung bei vorgegebener Korrelation der Sensor mit dem Fahrradcomputer gekoppelt ist und die von dem Sensor an den Empfänger übertragenen Daten zur Auswertung durch das Rechenwerk und Anzeige in der Anzeigeeinheit zugelassen sind.

Dieser Fahrradcomputer bietet zunächst den Vorteil, dass die Anzeigeeinheit und das Rechenwerk mit der Speichereinheit mit unterschiedlichen Sensoren zusammenwirken können, wobei die für den Nutzer relevanten Daten erst in der Anzeigeeinheit angezeigt werden, wenn der Sensor an dem Fahrradcomputer angemeldet worden ist. Dabei ist zu beachten, dass die Verwendung unterschiedlicher Sensortypen denkbar ist und die Anzeige in der Anzeigeeinheit auf die unterschiedlichen, dem Nutzer bekannt zu gebenden Daten abgestimmt sein kann. Die Auswertung dieser von dem Sensor erfassten und übermittelten Daten nur erfolgen kann, wenn der numerische Schlüssel bekannt und in der Speichereinheit hinterlegt ist. Dieser numerische Schlüssel dient daher dem vorbeugenden Diebstahlschutz, da der Sensor ohne den numerischen Schlüssel für den potenziellen Dieb wertlos ist.

Zweckmäßig ist es, wenn eine drahtlose Verbindung des einen Sender aufweisenden Sensors mit dem Empfänger vorgesehen ist, da so die Möglichkeit besteht, den Sensor variabel an unterschiedlichen Stellen des Fahrrades oder des Nutzers zu positionieren, ohne stets eine Kabelverbindung herstellen zu müssen.

Wenn die drahtlose Verbindung durch eine Funkstrecke realisiert ist, ergeben sich die Vorteile, daß keine direkte Sichtverbindung zwischen dem Sender des Sensors und dem Empfänger vorhanden sein muß, so daß Störungen im Betrieb vermieden sind.

Vorteilhaft ist es weiterhin, wenn eine Eingabeeinheit zur manuellen Eingabe von Daten und deren Speicherung in der Speichereinheit vorgesehen ist, um so den Fahrradcomputer speziell auf den gegebenen Anwendungsfall konfigurieren zu können, wobei neben einer bloßen Anpassung des Einheitensystems von beipsielsweise km/h in mph oder einer Anpassung des Radumfangs es möglich ist, auch die dem Sensor zugeordnete Codierung anfänglich zur Initiierung an die Speichereinheit zu übergeben.

Eine ganz besonders bevorzugte Ausführungsform der Erfindung ist dadurch gekennzeichnet, daß eine Mehrzahl von Sensoren mit unterschiedlichen Codierungen vorgesehen ist, und daß in der Speichereinheit eine Mehrzahl von den einzelnen Sensoren zugeordneten Codierungen hinterlegt sind. Bei dieser Ausführungsform hat der Nutzer die Auswahl, welche Sensoren er einsetzen möchte, so daß der Fahrradcomputer entsprechend den individuellen Wünschen in seinem funktionellen Umfang vom Nutzer zusammengestellt werden kann. Insbesondere bei der drahtlosen Verbindung durch die Funkstrecke tritt dieser Vorteil deutlich hervor, da die Mehrzahl der Sensoren ohne Rücksicht auf Kabelverbindungen beliebig positioniert werden kann.

Dabei ist es zweckmäßig, wenn der numerische Schlüssel zur Übertragung zusammen mit der Codierung vorgesehen ist, so dass auch während des Betriebes in regelmäßigen Abständen eine Überprüfung des numerischen Schlüssels erfolgt. Im übrigen besteht selbstverständlich auch die Möglichkeit, den numerischen Schlüssel über die Eingabeeinheit manuell einzugeben und so dauerhaft den entsprechenden Sensor freizuschalten.

Im Rahmen der Erfindung besteht die Möglichkeit, dass der Sensor durch einen Geschwindigkeitssensor und/oder Trittfrequenzmesser und/oder einen Pulsmesser gebildet ist, wobei insbesondere auf die Möglichkeit hinzuweisen ist, alle drei unterschiedlichen Sensortypen mit dem Fahrradcomputer zu koppeln. Da die drei unterschiedlichen Sensortypen unterschiedliche Platzierungen am Nutzer beziehungsweise am Fahrrad erfordern, treten die Vorteile der drahtlosen Verbindung mit dem Fahrradcomputer sowie der wahlweisen Aktivierung besonders deutlich hervor; beispielsweise kann also der Nutzer darauf verzichten, einen Pulsmesser einzusetzen, so daß der dafür in der Anzeigeeinheit vorgesehene Platz nicht erforderlich ist und für die Anzeige der Daten anderer Sensoren zur Verfügung gestellt werden kann.

Eine weitere ganz besonders bevorzugte Ausführungsform der Erfindung ist dadurch gekennzeichnet, daß der Sensor durch einen dem insbesondere batteriebetriebenen Frontlicht und/oder Rücklicht zugeordneten Spannungsmessern gebildet ist, da durch diesen Sensor die sicherheitsrelevante Information für den Nutzer über dessen passive Sichtbarkeit überprüfbar ist. Weiterhin sehr vorteilhaft ist es, wenn ein Sender zur Übertragung von Computerdaten und ein Aktuator mit einem Empfänger für die Computerdaten vorgesehen ist, so daß dann nicht nur unidirektional Daten von einem Sensor zu dem Computer übertragen werden können, sondern auch der Fahrradcomputer die Möglichkeit hat, von diesem ausgewertete Daten oder daraus abgeleitete Daten an den Empfänger des Aktuators zu übermitteln, der in Abhängigkeit dieser Daten agieren kann. Wenn der Aktuator durch einen dem Rücklicht zugeordneten Bremslichtschalter gebildet ist, ergibt sich der besonders große, sicherheitsrelevante Vorteil, daß beispielsweise bei einer von dem Fahrradcomputer erfassten signifikanten Geschwindigkeitsreduzierung der Aktuator aktiviert und der Bremslichtschalter zum Aufleuchten des Rücklichtes betätigt wird.

Eine deutliche Steigerung des Bedienungskomforts für den Nutzer läßt sich erreichen, indem der Aktuator einem Sicherungsschloß zugeordnet ist zum Öffnen des Schließzylinders bei Empfang der von dem Sender des Computers zum Öffnen gesendeten Daten aufweist. Damit ist für den Nutzer die Möglichkeit gegeben, das transportable Computergehäuse als tragbare Fernbedienung zu nutzen und so das Schloß durch Betätigung des Computergehäuses zu öffen, ohne unmittelbar manuell an dem oftmals nur schwer zugänglichen Schloß hantieren zu müssen.

Bevorzugt ist außerdem, daß der Aktuator dem Schaltwerk zugeordnet ist, um das Schalten zu unterstützen, das auch in Abhängigkeit von Daten erfolgen, die von anderen Sensoren ermittelt worden sind, so daß bei einer bestimmten Geschwindigkeit oder Pulsfrequenz ein Gangwechsel erfolgt.

Alternativ besteht auch die Möglichkeit, daß der Sensor einem die Position der Fahrradkette auf dem Ritzelblock detektierenden Gangindikator zugeordnet ist, um dem Nutzer in Abhängigkeit anderer Sensordaten durch die Anzeigeeinheit eine Gangempfehlung geben zu können.

Im folgenden wird die Erfindung an einem in der Zeichnung dargestellten Ausführungsbeispiel näher erläutert; es zeigen:
- Fig. 1: eine schematisch Darstellung eines erfindungsgemäßen Fahrradcomputers mit Sensoren und Aktuatoren an einem Fahrrad, und
- Fig. 2: eine der Figur 1 entsprechende Darstellung mit einer Symbolisierung des Datenaustausches zwischen der Recheneinheit und den Sensoren und Aktuatoren.

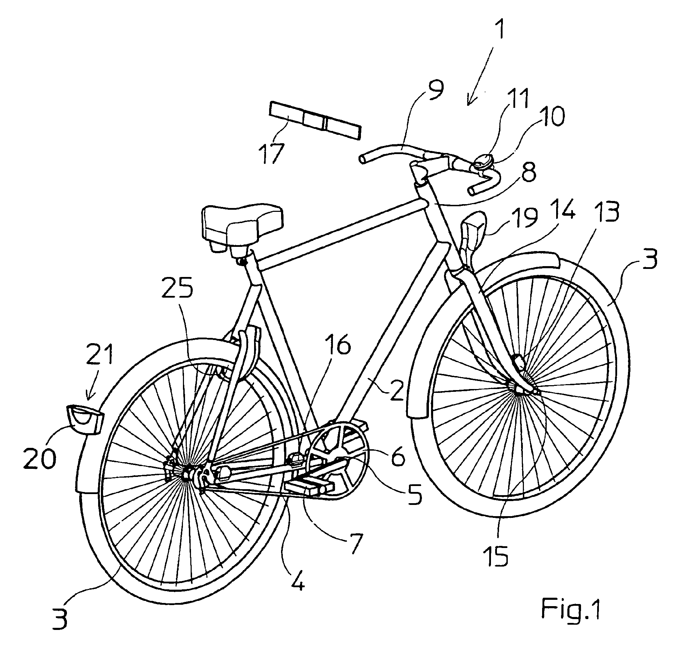

In der Figur 1 ist ein Fahrrad 1 dargestellt mit zwei in einem Fahrradrahmen 2 drehbar gelagerten Rädern 3, von denen das Hinterrad 4 über eine Fahrradkette mit einem am Tretlager 5 angeordneten Kettenblatt 6 gekoppelt ist, das durch die Fahrradpedale 7 verdreht werden kann. Am Lenkkopf 8 des Fahrradrahmens 2 ist der Fahrradlenker 9 positioniert, auf dem das Computergehäuse 10 eines Fahrradcomputers 11 angeordnet ist. In dem Computergehäuse 10 sind eine Anzeigeeinheit 12, ein Rechenwerk mit einer Speichereinheit sowie ein Empfänger für Sensordaten angeordnet. Weiterhin umfasst der Fahrradcomputer 11 mehrere Daten generierende, mit dem Empfänger verbundene Sensoren 13, nämlich ein der Vordergabel 14 zugeordneter Geschwindigkeitsmesser 15, ein dem Tretlager 5 zugeordneter Trittfrequenzmesser 16 sowie ein am Brustkorb des Nutzers beziehungsweise am Handgelenk oder am Hals zu tragender Pulsmesser 17.

In der Speichereinheit ist eine Mehrzahl von den einzelnen Sensoren 13 zugeordneten Codierungen hinterlegt, wobei jedem Sensor eine Codierung zugeordnet ist, durch deren Übermittlung an das Rechenwerk und dessen Vergleich mit der in der Speichereinheit hinterlegten Codierung bei vorgegebener Korrelation der Sensor 13 mit dem Fahrradcomputer 11 gekoppelt und die von dem Sensor 13 an den Empfänger übetragenen Daten zur Auswertung durch das Rechenwerk und Anzeige in der Anzeigeeinheit 12 zugelassen sind. Jedem Sensor 13 ist ein Sender zugeordnet zur drahtlosen Verbindung des Sensors 13 mit dem Empfänger, wobei die drahtlose Verbindung durch eine Funkstrecke realisiert ist.

Der Fahrradcomputer 11 weist weiterhin eine dem Computergehäuse 10 zugeordnete Eingabeeinheit 18 zur manuellen Eingabe von Daten und deren Speicherung in der Speichereinheit auf.

Jedem Sensor 13 ist ein numerischer Schlüssel zur Hinterlegung in der Speichereinheit zugeordnet, der beispielsweise durch die Eingabeeinheit 18 an die Speichereinheit übergeben werden kann. Weiterhin ist der numerische Schlüssel zur Übertragung zusammen mit der Codierung vorgesehen, so daß im Betrieb eine Überprüfung des Sensors 13 möglich ist, dessen Daten ohne den richtigen numerischen Schlüssel von dem Rechenwerk nicht ausgewertet und in der Anzeigeeinheit 12 nicht angezeigt werden. Umgekehrt besteht auch die Möglichkeit, bei Erkennung der Sensoren 13 durch das Rechenwerk auf die Präsenz eines bestimmten Fahrrades 1 zu schließen, so daß der Nutzer problemlos das Computergehäuse 10 auch an unterschiedlichen Fahrrädern einsetzen kann, ohne stets selber Einstellungsänderungen vornehmen zu müssen.

Weiterhin besteht auch die Möglichkeit, daß der Sender durch jeweils einen in dem batteriebetriebenen Frontlicht 19 und Rücklicht 20 zugeordneten Spannungsmesser gebildet ist, der als sicherheitsrelevante Information den Spannungsabfall anzeigen und damit den Ladezustand der Batterie beziehungsweise der Akkumulatoren überprüfen kann.

Weiterhin weist der Fahrradcomputer 11 einen Sender zur Übertragung von Computerdaten auf, der diese Computerdaten an einen mit einem Empfänger versehenen Aktuator 21 übermittelt, wobei bei dem in der Zeichnung dargestellten Ausführungsbeispiel der Aktuator 21 durch einen dem Rücklicht 20 zugeordneten Bremslichtschalter gebildet ist. Bei dieser Ausführungsform ergibt sich die sehr vorteilhafte Möglichkeit, daß bei einer von dem Fahrradcomputer 11 erfassten Verringerung der Geschwindigkeit der Bremslichtschalter betätigt wird und dadurch das Rücklicht 20 aufleuchtet, wobei selbstverständlich auch ein separat vom Rücklicht bereitgestelltes Bremslicht entsprechend angesteuert werden kann.

Ein weiterer Aktuator 21 ist einem Sicherungsschloß 25 zugeordnet zum Öffnen des Schließzylinders bei Empfang der von dem Sender des Fahrradcomputers 11 zum Öffnen gesendeten Daten aufweist. Das transportable Computergehäuse 10 fungiert dabei als Fernbedienung zur Betätigung des Sicherungsschlosses 25.

Ein weiterer Aktuator 21 ist dem Schaltwerk zugeordnet, wobei ein weiterer Sensor 13 einem die Position der Fahrradkette 4 auf dem Ritzelblock detektierenden Gangindikator 22 zugeordnet ist, um dem Nutzer mehr Komfort beim Schalten oder der Bedienung der Schaltung bieten zu können.

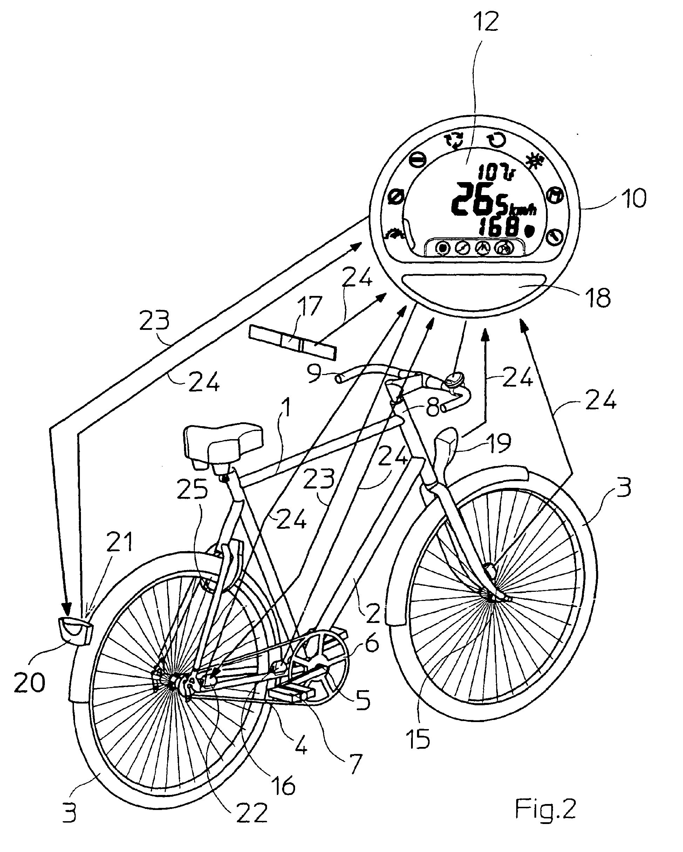

In Figur 2 sind zur Verdeutlichung des Datenaustausches zwischen den Sensoren 13, den Aktuatoren 21 und dem Computergehäuse 10 Pfeile 23/24 dargestellt, die die Richtung des Datenflusses angeben.

## Patentansprüche

1. Fahrradcomputer mit einem Computergehäuse (10), in dem eine Anzeigeeinheit (12), ein Rechenwerk mit einer Speichereinheit und ein Empfänger für Sensordaten angeordnet sind, und mit einem Daten generierenden, mit dem Empfänger verbundenen Sensor (13), **dadurch gekennzeichnet, dass** in der Speichereinheit eine Codierung und ein numerischer Schlüssel hinterlegt ist, dass dem Sensor (13) der numerische Schlüssel und eine Codierung zugeordnet ist, durch deren Übermittlung an das Rechenwerk und dessen Vergleich mit der in der Speichereinheit hinterlegten Codierung bei vorgegebener Korrelation der Sensor (13) mit dem Fahrradcomputer (11) gekoppelt ist und die von dem Sensor (13) an den Empfänger übertragenen Daten zur Auswertung durch das Rechenwerk und Anzeige in der Anzeigeeinheit (12) zugelassen sind.

2. Fahrradcomputer nach Anspruch 1, **dadurch gekennzeichnet, dass** eine drahtlose Verbindung des einen Sender aufweisenden Sensors (13) mit dem Empfänger vorgesehen ist.

3. Fahrradcomputer nach Anspruch 2, **dadurch gekennzeichnet, dass** die drahtlose Verbindung durch eine Funkstrecke realisiert ist.

4. Fahrradcomputer nach einem der Ansprüche 1 bis 3, **dadurch gekennzeichnet, dass** eine Eingabeinheit (18) zur manuellen Eingabe von Daten und deren Speicherung in der Speichereinheit vorgesehen ist.

5. Fahrradcomputer nach einem der Ansprüche 1 bis 4, **dadurch gekennzeichnet, dass** eine Mehrzahl von Sensoren (13) mit unterschiedlichen Codierungen vorgesehen ist, und dass in der Speichereinheit eine Mehrzahl von den einzelnen Sensoren (13) zugeordneten Codierungen hinterlegt sind.

6. Fahrradcomputer nach einem der Ansprüche 1 bis 5, **dadurch gekennzeichnet, dass** der numerische Schlüssel zur Übertragung zusammen mit der Codierung vorgesehen ist.

7. Fahrradcomputer nach einem der Ansprüche 1 bis 6, **dadurch gekennzeichnet, dass** der Sensor (13) durch einen Geschwindigkeitsmesser (15) gebildet ist.

8. Fahrradcomputer nach einem der Ansprüche 1 bis 7, **dadurch gekennzeichnet, dass** der Sensor (13) durch einen Trittfrequenzmesser (16) gebildet ist.

9. Fahrradcomputer nach einem der Ansprüche 1 bis 8, **dadurch gekennzeichnet, dass** der Sensor (13) durch einen Pulsmesser (17) gebildet ist.

10. Fahrradcomputer nach einem der Ansprüche 1 bis 9, **dadurch gekennzeichnet, dass** der Sensor (13) durch einen dem insbesondere batteriebetriebenen Frontlicht (19) und/oder Rücklicht (20) zugeordneten Spannungsmesser gebildet ist.

11. Fahrradcomputer nach einem der Ansprüche 1 bis 10, **dadurch gekennzeichnet, dass** ein Sender zur Übertragung von Computerdaten und ein mit einer Energiequelle verbundener Aktuator (21) mit einem Empfänger für die Computerdaten vorgesehen ist.

12. Fahrradcomputer nach Anspruch 11, **dadurch gekennzeichnet, dass** der Aktuator (21) durch einen dem Rücklicht zugeordneten Bremslichtschalter gebildet ist.

13. Fahrradcomputer nach Anspruch 11 oder 12, **dadurch gekennzeichnet, dass** der Aktuator (21) einem Sicherungsschloss (15) zugeordnet ist zum Öffnen des Schliesszylinders bei Empfang der von dem Sender des Fahrradcomputers (11) zum Öffnen gesendeten Daten aufweist.

14. Fahrradcomputer nach einem der Ansprüche 11 bis 13, **dadurch gekennzeichnet, dass** der Aktuator (21) dem Schaltwerk zugeordnet ist.

15. Fahrradcomputer nach einem der Ansprüche 1 bis 14, **dadurch gekennzeichnet, dass** der Sensor (13) einem die Position der Fahrradkette (4) auf dem Ritzelblock detektierenden Gangindikator zugeordnet ist.

## Claims

1. A bicycle computer comprising a computer housing (10) in which are arranged a display unit (12), an arithmetic means having a memory unit and a receiver for sensor data, and a data-generating sensor (13) connected to the receiver, **characterised in that** a coding and a numerical key are stored in the memory unit, that associated with the sensor (13) is the numerical key and a coding, by the transmission of which to the arithmetic means and the comparison thereof with the coding stored in the memory unit with a predetermined correlation the sensor (13) is coupled to the bicycle computer (11) and the data transmitted from the sensor (13) to the receiver are admitted for evaluation by the arithmetic means and display in the display unit (12).

2. A bicycle computer according to claim 1 **characterised in that** there is provided a wireless connection of the sensor (13) having a sender to the receiver.

3. A bicycle computer according to claim 2 **characterised in that** the wireless connection is implemented by a radio path.

4. A bicycle computer according to one of claims 1 to 3 **characterised in that** there is provided an input unit (18) for manual input of data and storage thereof in the memory unit.

5. A bicycle computer according to one of claims 1 to 4 **characterised in that** there is provided a plurality of sensors (13) having different codings and that a plurality of codings associated with the individual sensors (13) are stored in the memory unit.

6. A bicycle computer according to one of claims 1 to 5 **characterised in that** the numerical key is provided for transmission together with the coding.

7. A bicycle computer according to one of claims 1 to 6 **characterised in that** the sensor (13) is formed by a speed measuring device (15).

8. A bicycle computer according to one of claims 1 to 7 **characterised in that** the sensor (13) is formed by a pedalling cadence measuring device (16).

9. A bicycle computer according to one of claims 1 to 8 **characterised in that** the sensor (13) is formed by a pulse measuring device (17).

10. A bicycle computer according to one of claims 1 to 9 **characterised in that** the sensor (13) is formed by a voltage measuring device associated with the in particular battery-powered front light (19) and/or rear light (20).

11. A bicycle computer according to one of claims 1 to 10 **characterised in that** there is provided a sender for the transmission of computer data and an actuator (21) connected to an energy source with a receiver for the computer data.

12. A bicycle computer according to claim 11 **characterised in that** the actuator (21) is formed by a brake light switch associated with the rear light.

13. A bicycle computer according claim 11 or claim 12 **characterised in that** the actuator (21) is associated with a securing lock (15) for opening the lock cylinder upon reception of the data sent from the sender of the bicycle computer (11) for opening purposes.

14. A bicycle computer according to one of claims 11 to 13 **characterised in that** the actuator (21) is associated with a switching mechanism.

15. A bicycle computer according to one of claims 1 to 14 **characterised in that** the sensor (13) is associated with a gear indicator for detecting the position of the bicycle chain (4) on the freewheel block.

## Revendications

1. Ordinateur de bicyclette, comprenant un boîtier d'ordinateur (10), dans lequel sont disposés une unité d'affichage (12), une unité de calcul avec une unité de mémoire, et un récepteur pour des données de capteur, et comprenant un capteur (13) générant des données et relié au récepteur, **caractérisé en ce qu'**un codage et une clé numérique sont enregistrés dans l'unité de mémoire, **en ce que** la clé numérique et un codage sont associés au capteur (13), et leur transmission à l'unité de calcul et la comparaison avec le codage enregistré dans l'unité de mémoire, pour une corrélation prédéterminée, couplent le capteur (13) à l'ordinateur de bicyclette (11), et les données, transmises par le capteur (13) au récepteur, sont admises pour une exploitation par l'unité de calcul et une visualisation dans l'unité d'affichage (12).

2. Ordinateur de bicyclette selon la revendication 1, **caractérisé en ce qu'**il est prévu une liaison sans fil entre le capteur (13), muni d'un émetteur, et le récepteur.

3. Ordinateur de bicyclette selon la revendication 2, **caractérisé en ce que** la liaison sans fil est réalisée par un trajet radioélectrique.

4. Ordinateur de bicyclette selon une des revendications 1 à 3, **caractérisé en ce qu'**il est prévu une unité d'entrée (18) pour la saisie manuelle de données et leur enregistrement dans l'unité de mémoire.

5. Ordinateur de bicyclette selon une des revendications 1 à 4, **caractérisé en ce qu'**il est prévu une pluralité de capteurs (13) avec des codages différents, et **en ce qu'**une pluralité de codages, associés aux différents capteurs (13), est enregistrée dans l'unité de mémoire.

6. Ordinateur de bicyclette selon une des revendications 1 à 5, **caractérisé en ce que** la clé numérique est prévue pour une transmission conjointement avec le codage.

7. Ordinateur de bicyclette selon une des revendications 1 à 6, **caractérisé en ce que** le capteur (13) est constitué d'un tachymètre (15).

8. Ordinateur de bicyclette selon une des revendications 1 à 7, **caractérisé en ce que** le capteur (13) est constitué d'un compteur de cadence de pédalage (16).

9. Ordinateur de bicyclette selon une des revendications 1 à 8, **caractérisé en ce que** le capteur (13) est constitué d'un cardiofréquencemètre (17).

10. Ordinateur de bicyclette selon une des revendications 1 à 9, **caractérisé en ce que** le capteur (13) est constitué d'un voltmètre associé au phare avant (19) et/ou au phare arrière (20), notamment alimentés par piles.

11. Ordinateur de bicyclette selon une des revendications 1 à 10, **caractérisé en ce qu'**il est prévu un émetteur, pour la transmission de données informatiques, et un actionneur (21) relié à une source d'énergie et muni d'un récepteur pour les données informatiques.

12. Ordinateur de bicyclette selon la revendication 11, **caractérisé en ce que** l'actionneur (21) est constitué d'un contacteur de feu de stop associé au phare arrière.

13. Ordinateur de bicyclette selon la revendication 11 ou 12, **caractérisé en ce que** l'actionneur (21) est associé à une serrure antivol (25) pour ouvrir le cylindre de serrure lors de la réception des données envoyées par l'émetteur de l'ordinateur de bicyclette (11), en vue de l'ouverture.

14. Ordinateur de bicyclette selon une des revendications 11 à 13, **caractérisé en ce que** l'actionneur (21) est associé au dérailleur.

15. Ordinateur de bicyclette selon une des revendications 1 à 14, **caractérisé en ce que** le capteur (13) est associé à un indicateur de vitesse détectant la position de la chaîne de bicyclette (4) sur le bloc de pignon.
